Europäisches Patentamt

(19) European Patent Office

Office européen des brevets

(11) Publication number: **0 081 232**
**B1**

(12) **EUROPEAN PATENT SPECIFICATION**

(45) Date of publication of patent specification: **27.11.85**

(21) Application number: **82111315.6**

(22) Date of filing: **07.12.82**

(51) Int. Cl.⁴: **H 04 N 5/783, G 11 B 21/10**

(54) Method and apparatus for detecting track jumping point in magnetic recording and reproducing system.

(30) Priority: **07.12.81 JP 195685/81**
**01.09.82 JP 150762/82**

(43) Date of publication of application:
**15.06.83 Bulletin 83/24**

(45) Publication of the grant of the patent:
**27.11.85 Bulletin 85/48**

(84) Designated Contracting States:
**AT DE FR**

(56) References cited:
**DD-A- 151 526**
**DE-A-2 809 402**
**DE-A-2 903 637**
**DE-A-2 941 013**
**DE-A-3 046 370**

(73) Proprietor: **Hitachi, Ltd.**
**5-1, Marunouchi 1-chome**
**Chiyoda-ku Tokyo 100 (JP)**

(72) Inventor: **Kojima, Noboru**
**Totsukaryo 1745 Totsukacho**
**Totsuka-ku Yokohama (JP)**
Inventor: **Kuroyanagi, Tomomitsu**
**Tabikoryo, 391-2, Tabiko**
**Katsuta-shi, Ibaraki-ken (JP)**
Inventor: **Shibata, Akira**
**857-11, Tsuda**
**Katsuta-shi (JP)**
Inventor: **Terada, Akitoshi**
**B-24-1, 342-12, Tsutsumi**
**Chigasaki-shi (JP)**

(74) Representative: **Altenburg, Udo, Dipl.-Phys.**
**et al**
**Patent- und Rechtsanwälte Bardehle-**
**Pagenberg-Dost-Altenburg & Partner Postfach**
**86 06 20**
**D-8000 München 86 (DE)**

Courier Press, Leamington Spa, England.

## Description

The present invention relates to a track jumping point detecting method for detecting with accuracy a timing at which magnetic heads move or jump, respectively, to an adjacent record track or to a next adjacent track located by one track away in a magnetic recording and reproducing apparatus such as a video tape recorder (hereinafter referred to as VTR). The invention also concerns an apparatus for carrying out the method.

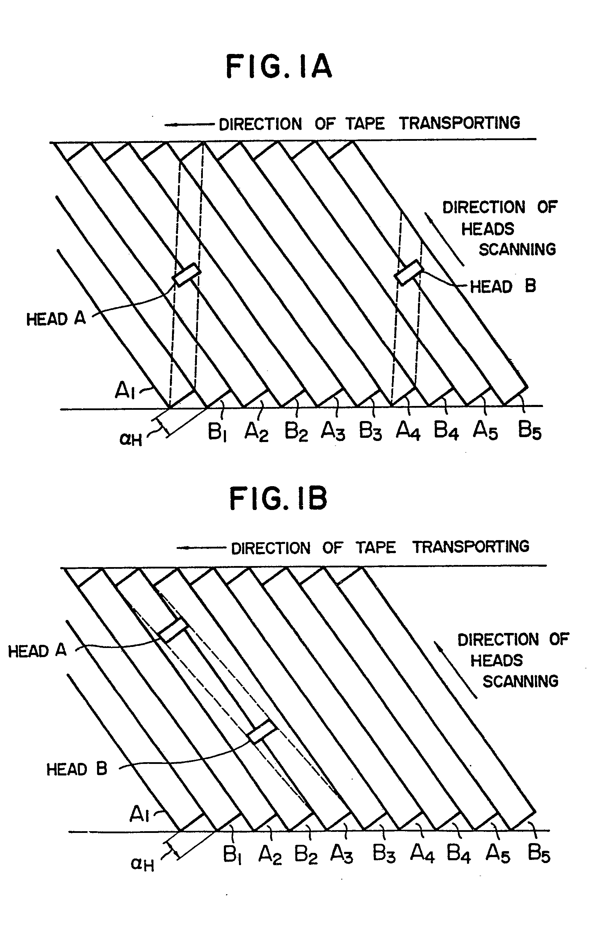

In general, in a helical scan type VTR in which at least two rotary magnetic heads having different azimuth angles are employed, various difficulties are encountered in special playback or reproduction modes such as search reproduction, still reproduction and the like. For example, a horizontal skew phenomenon due to discontinuity of the horizontal synchronization and phenomenon of decolorization (e.g. disappearance of colors) in the PAL system may take place in dependence on magnitude of offset or deviation between adjacent record tracks on a magnetic tape. Besides, noise bands will make appearance on a reproduced picture independent of the deviation. All of these undesirable phenomena occur every time one magnetic head having a predetermined azimuth angle jumps from the track which is being currently reproduced to the track located immediately adjacent thereto or the track located by one track away therefrom in the helical scan type VTR. First of all, these problems will be discussed in some detail below by referring to Figures 1A, 1b, Figure 2 and Figure 3 of the accompanying drawings.

Figure 1A illustrates, by way of example, a pattern of record tracks on a magnetic tape and tracing or tracking patterns of magnetic heads in the search reproduction mode. Referring to Figure 1A, the recording of video information on the record tracks has been made by means of two magnetic heads having azimuth angles different from each other. More specifically, the recording on the tracks $A_1$, $A_2$, $A_3$ and so forth has been made by one magnetic head A having an azimuth angle, while recording on the tracks $B_1$, $B_2$, $B_3$ and so forth are made by the other magnetic head B having an azimuth angle different from that of the magnetic head A. The magnetic head A is destined to reproduce information recorded on the tracks $A_1$, $A_2$, $A_3$ and so forth, while magnetic head B serves for reproduction of information recorded on the tracks $B_1$, $B_2$, $B_3$ and so forth. In the case of the example illustrated in Figure 1A, it is assumed that reproduction of information recorded on the tracks $B_4$, $B_5$ and $B_6$ by the magnetic head B is effected in succession to the reproduction of information on the tracks $A_1$, $A_2$ and $A_3$ by the magnetic head A and so on.

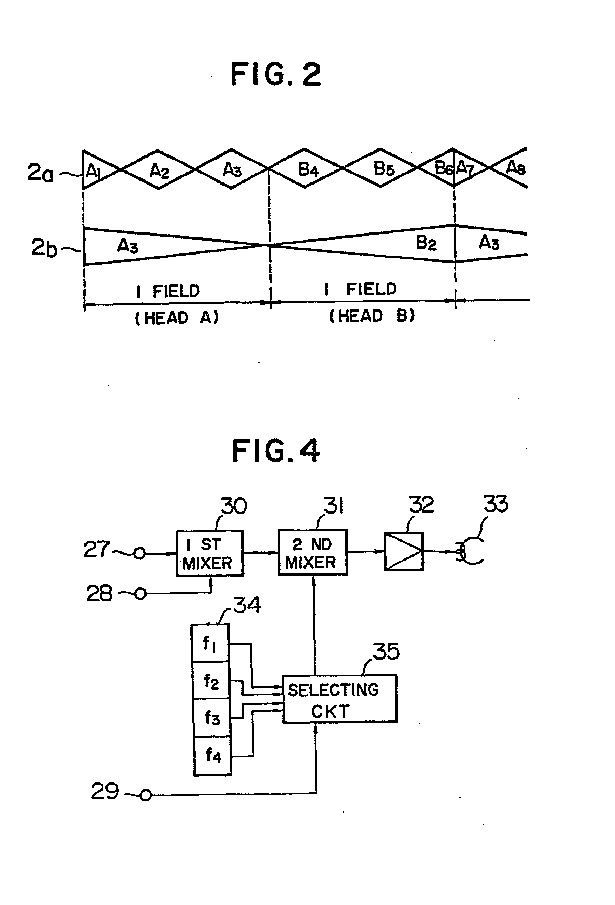

In this connection, Figure 2 graphically illustrates at $2a$ the envelope characteristic of the reproduced output signals of the magnetic heads. As will be seen from the figure, constrictions are produced at every one of so-called jumping points at which the magnetic head A, for example, is switched over from the record track $A_1$ to the track $A_2$. Such constriction means that the corresponding reproduced output signal is at lower level, giving rise to occurrence of a noise band. When the aforementioned deviation is represented by $a_H$, jumping of lines in a number corresponding to $2 \cdot a_H$ takes place, which means that there is included in the reproduced signal the horizontal line signal which is excluded from reproduction. As a result, unless $2 \cdot a_H$ is an integral multiple of a length $H_L$ of the television or TV signal corresponding to the single horizontal line as viewed in the longitudinal direction of the record track, the horizontal skew phenomenon will make appearance.

Further, when $2 \cdot a_H$ is an even multiple of the length $H_L$, the decolorization phenomenon in which the reproduced picture is not colored occurs in the PAL system. As is known, in the PAL system, $(R-Y)$ component of the chrominance signal is phase-inverted at every horizontal period. Accordingly, a normal picture can be reproduced only when the components $(R-Y)$ and $-(R-Y)$ are regularly alternated upon reproduction. In this connection, if $2 \cdot a_H$ is an even multiple of $H_L$, the above mentioned regularity can no more be maintained in the reproduced signal, as the result of which color synchronization is disturbed in the associated TV receiver, thereby giving rise to the problem of the decolorization.

On the other hand, Figure 1B illustrates, by way of example, record tracks on a magnetic tape together with tracking or tracing patterns on the magnetic heads in the still reproduction mode. In the case of the illustrated example, it is assumed that the magnetic heads A and B are to pick up the information recorded on the record tracks $A_3$ and $B_2$, respectively, wherein the envelope characteristic of the reproduced output signals is such as illustrated in Figure 2 at $2b$. As can be seen, contriction of the reproduced output signal occurs at a point where the signal reproduced from the track $A_3$ is switched over to the signal reproduced from the track $B_2$. This transition from the track $A_3$ to the track $B_2$ is also referred to as the jump point, because the reproduction returns to the track $B_2$ from the track $A_3$ by jumping over one track although the reproduction of the track $A_3$ should be immediately followed by the reproduction of the track $B_3$ in the normal reproduction mode. At this jump point, there occur unwanted phenomena such as appearance of the noise band and the horizontal skew as well as the decolorization in the PAL system, as is in the case of the aforementioned search reproduction mode. Further, the track jumping brings about similar problems in the slow reproduction mode as well, although detailed elucidation in this respect is herein omitted.

Next, description will be made as to the measures heretofore taken for obviating these difficulties. In the first place, it is known to suppressing the horizontal skew phenomenon which is ascribable to the discontinuity in the horizontal synchronization brought about at the track jumping point with the aid of a delay line circuit. For example, in case $2 \cdot a_H = 1.5$ H where 1 H represents a single horizontal period, the discontinuity in the horizontal synchronization corresponding to 1.5 H will occur at the track jumping point, giving rise to the appearance of the horizontal skew of 0.5 H in the reproduced picture. Accordingly, when the reproduced signal transmitted through the delay line having a delay time of 0.5 H is alternately changed over with the reproduced signal which is not transmitted through the delay line at the track jumping point, the jumping over the horizontal line at the track jumping point corresponds to 1 H or 2 H. In other words, because of the integral multiple of H, the horizontal synchronization can be continued, whereby the horizontal skew phenomenon can be suppressed. There is one prior art method in which the jump point is detected by detecting the phase deviation of the horizontal synchronizing signal, however this prior art method is disadvantageous in that it can not be adopted for the record tracks where $2 \cdot a_H$ is equal to an integral multiple of $H_L$.

Next, as a method of protecting the reproduced picture from deterioration in the image quality due to the noise band, it is known, for example, to confine the noise band within the vertical blanking period in the still reproduction mode, to thereby prevent the noise band from making appearance on the reproduced picture. Further, in the search reproduction mode, it is possible to reproduce less uncomfortable image by fixing the noise band at a predetermined position on the reproduced picture, as compared with the case where the noise band is not fixed. In this connection, it should be recalled that the noise band is generated at the track jumping point which is usually detected by detecting the minimum level of the reproduced FM signal according to the prior art method. To this end a low-pass filter or LPF is used for the envelope detection. However, use of the LPF provides a cause for the phase deviation, making it impossible to detect the track jumping point with a reasonable accuracy.

Further, as a method of suppressing the phenomenon of decolorization in the PAL system, there can be mentioned a method of exchanging the reproduced chroma signal delayed by 1 H and the non-delayed reproduced chroma signal at the track jumping point.

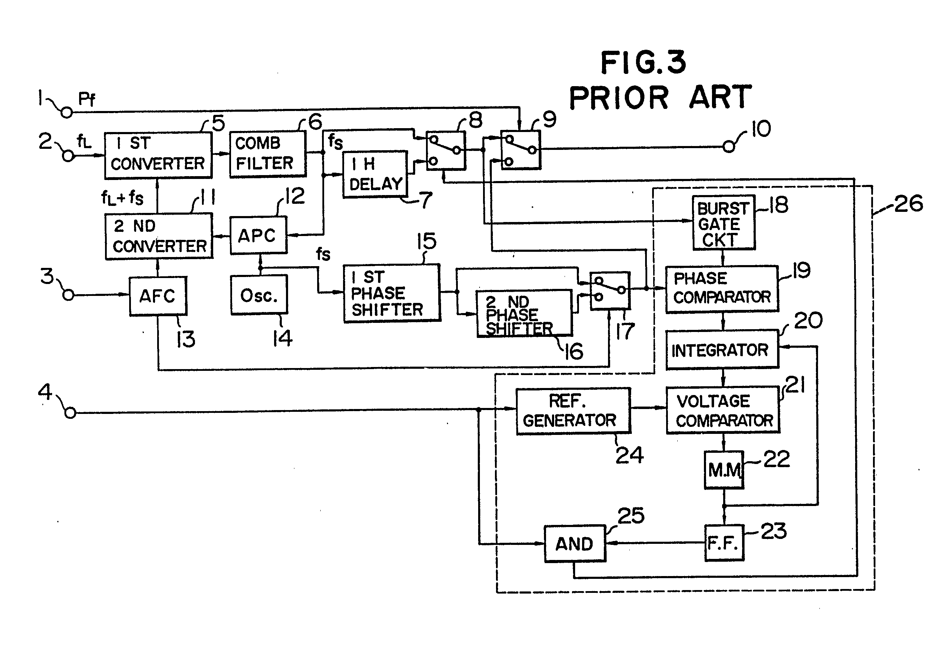

Figure 3 shows a typical example of hitherto known apparatus for processing the reproduced chroma signal for the PAL system in which a 90°—phase step of a burst signal produced upon the track jumping is detected for determining the track jumping point. In Figure 3, a reference numeral 1 denotes an input terminal for a burst flag pulse signal $P_f$, 2 denotes an input terminal for a low-frequency converted chroma signal having a carrier frequency $f_L$ upon being reproduced, 3 denotes an input terminal for a horizontal synchronizing signal, 4 denotes an input terminal for reproduction mode select signals, 5 denotes a first converter, 6 denotes a comb line filter, 7 denotes a delay line imparting a delay of 1 H, 8 denotes a first change-over switch, 9 denotes a second change-over switch, 10 denotes an output terminal for corrected reproduced chroma signal, 11 denotes a second converter, 12 denotes an APC (Automatic Phase Control) circuit, 14 denotes an oscillator circuit, 15 denotes a first phase shifter, 16 denotes a second phase shifter, 17 denotes a third change-over switch, 18 denotes a burst gate circuit, 19 denotes a phase comparator circuit, 20 denotes an integrator, 21 denotes a voltage comparator, 22 denotes a monostable multivibrator, 23 denotes a flip-flop circuit, 24 denotes a reference (REF) signal generator, 25 denotes an AND circuit, and 26 denotes a track jump pulse generating circuit (hereinafter also referred to as JP generating circuit).

Describing operations of the apparatus shown in Figure 3, the low-frequency converted chroma signal applied to the input terminal 2 is converted to the chroma signal having a carrier frequency $f_s$ of ca. 4.43 MHz by the first converter 5 and transmitted to the first change-over switch 8 and the 1 H—delay line 7 through the comb line filter 6. The first change-over switch 8 serves for changing over the input chroma signal and the output chroma signal to and from the 1 H—delay line 7 every time discontinuity of the chroma signal is produced upon every track jumping. The chroma signal thus having been corrected in respect with the discontinuity is supplied to the second change-over switch 9.

This second switch 9 serves for replacing only the burst of the chroma signal supplied from the first change-over switch 17 by the reference signal supplied from the third change-over switch 17 in response to the burst flag pulse signal $P_f$ applied to the input terminal 1. The reference signal available from the output of the third switch 17 is a signal whose phase difference relative to the carrier of the reproduced chroma signal is changed over between 135° and 225° for every line and is similar to the burst signal in the PAL system. The chroma signal thus corrected in respect of the discontinuity and obtained from the output of the second change-over switch 9 is supplied from the output terminal 10 to a mixer to be combined with a reproduced luminance signal.

Next, description will be made on the track jump pulse (also referred to as JP signal) generating circuit 26 indicated as enclosed by a broken line block. The burst signal obtained at the output of the first change-over switch 8 is supplied to the phase comparator circuit 19 by way of the burst gate circuit 18. At the phase comparator circuit 19, the burst signal undergoes phase comparison with a reference signal similar to the burst signal, whereby a 90°—phase step of the burst signal which is produced when the components (R−Y) and −(R−Y) of the reproduced chroma signal are not alternately arrayed for every line is detected. The resulting detection pulse is integrated by the integrator circuit 20 whose output voltage is compared with the REF signal supplied from the REF signal generator circuit 24 by the voltage comparator circuit 21. A detection signal indicating that the output voltage from the integrator circuit 20 exceeds the level of the REF signal is fed through the monostable multivibrator 22 back to the integrator circuit 20 for discharging the integrated signal on one hand and fed to the AND circuit 25 through the flip-flop 23 to be ANDed with the reproduction mode signal supplied from the input terminal 4, whereby the resulting JP (i.e. track jump pulse) signal is introduced to the first change-over switch 8.

The prior art apparatus mentioned above is however disadvantageous in that absence of the burst signal as caused, for example, by drop-out involves error in the detection of the track jumping point to thereby falsify the correction of discontinuity of the chroma signal described hereinbefore. Further, for accomplishing the correction sufficiently accurately, it is required to change over the level of the REF signal generated by the REF signal generator circuit 24 between different values preset for the special reproductions such as the search reproduction, still reproduction and the slow reproduction, respectively, requiring much complicated circuit configurations. Besides, the level of the REF signal varies in dependence on other parameters such as the head track width, video track pitch and others, involving difficulty in the level setting of the REF signal while requiring much complicated circuit configuration, to further disadvantages. Needless to say, it is extremely difficult to realize the system compatibility as desired.

It is an object of the present invention to provide a track jump detecting method which is capable of detecting accurately the timing at which a magnetic head is switched over to an adjacent track or to a next adjacent track located by one track away in a magnetic recording/reproducing apparatus.

It is another object of the present invention to provide a method of detecting with enhanced accuracy the track jumping points at which magnetic heads are displaced to the respective adjacent tracks or the respective next adjacent tracks located by one track away in a helical scan type video tape recorder or VTR in which at least two rotary magnetic heads having different azimuth angles are employed.

It is a further object of the present invention to provide an apparatus which can carry out the above methods with a simplified and inexpensive circuit structure. For accomplishing the above objects, the method of the main claim is provided. Further embodiments of the invention are disclosed in the subclaims.

In an exemplary embodiment of the invention, four pilot signals $f_1$, $f_2$, $f_3$ and $f_4$ having frequencies different from one another may be recorded on the record tracks in a predetermined sequence. These pilot signals of four different frequencies are related to one another in respect of the frequency in such a manner as defined by the following expressions:

$$f_2 - f_1 \simeq f_4 - f_3 \simeq k \cdot f_H$$

$$f_3 - f_1 \simeq f_4 - f_2 \simeq m \cdot f_H$$

$$k \neq m$$

where $f_H$ represents the horizontal scanning frequency, and $k$ and $m$ are positive numbers, respectively.

The pilot signals of four different frequencies may be, respectively, recorded on the associated record tracks over the whole region thereof or alternatively may be recorded intermittently during the horizontal synchronization or front porch period. The sequence in which the pilot signals of four different frequencies $f_1$ to $f_4$ may be in the order of $f_1$, $f_2$, $f_4$ and $f_3$ or alternatively $f_1$, $f_3$, $f_4$ and $f_2$. More particularly, when the two magnetic heads having different azimuth angles are designated by A and B, respectively, the magnetic head A is so adapted as to record the pilot signal $f_1$ or $f_4$ while the other magnetic head B records the pilot signal $f_2$ or $f_3$ on the associated record tracks in either one of the aforementioned order.

According to the invention, the pilot signals reproduced in a special reproduction mode are subjected to frequency conversion with carrier signals having the same frequencies as the pilot signals and subsequently the components $m \cdot f_H$ and $k \cdot f_H$ are extracted. By determining the difference in frequency between both the components $m \cdot f_H$ and $k \cdot f_H$, it is possible to detect the track jumping points. The carrier signal for the pilot signals reproduced by the magnetic head A should be allotted with the frequency $f_2$ or $f_3$, while the carrier signal for the pilot signals reproduced by the magnetic head B should have the frequency $f_1$ or $f_4$.

The pilot signals should preferably have the frequencies lying in the vicinity of ca. 100 KHz. As an example of the set of pilot signals which satisfy the above defined relations, selection may be made such that $f_1 = 6.5 \ f_H$, $f_2 = 7.5 \ f_H$, $f_3 = 9.5 \ f_H$, and $f_4 = 10.5 \ f_H$ for $k=1$ and $m=3$. As another example, the pilot frequencies may be selected such that $f_1 = 6.88 \ f_H$, $f_2 = 7.8 \ f_H$, $f_3 = 9.75 \ f_H$ and $f_4 = 10.64 \ f_H$ for $k=1$ and $m=3$.

In a further embodiment of the present invention, the timing signal representative of the detected track jump may be subjected to a phase comparison with a control signal synchronized with the changing-over of the magnetic heads through a PLL circuit, wherein a capstan servo circuit is controlled in accordance with the result of the comparison, to thereby obtain the much stabilized timing signals representing the track jumping points, respectively.

The above and other objects, novel features and advantages of the present invention will become more apparent by reading the following description taken in conjunction with the accompanying drawings, in which:

Figure 1A is a schematic view illustrating, by way of example, a relationship between record tracks and magnetic heads (A) and (B) in a search reproduction mode of a two-head helical scan type video tape recorder or VTR;

Figure 1B is a schematic view illustrating, by way of example, a relationship between the record tracks and the magnetic heads (A) and (B) in a still reproduction mode of the two-head helical scan type VTR;

Figure 2 shows signal waveform diagrams for schematically illustrating examples of FM signals reproduced in the search reproduction mode and the still reproduction mode illustrated in Figures 1A and 1B, respectively;

Figure 3 is a block diagram showing a circuit arrangement for protecting color video signals for PAL system from decolorization with the aid of hitherto known track jumping point detecting means;

Figure 4 is a block diagram showing a circuit arrangement for recording in multiple four pilot signals of different frequencies on the record tracks according to the teaching of the present invention;

Figure 5 is a plan view illustrating schematically the record tracks having the four pilot signals of different frequencies recorded on a recording tape of the two-head helical scan type VTR and tracking patterns of the magnetic heads (A) and (B) in the search reproduction mode;

Figure 6 is a block diagram showing a circuit arrangement for detecting the track jumping point in a special reproduction mode with the aid of the four pilot signals of different frequencies according to an embodiment of the present invention;

Figure 7 shows signal waveform diagrams of signals appearing at various circuit points of the track jumping point detecting circuit shown in Figure 6 in the search reproducing operation effected at a speed six times as high as the normal reproducing speed;

Figure 8 is a plan view illustrating schematically the record tracks having the four pilot signals of different frequencies recorded on the magnetic tape of the two-head helical scan type VTR together with the tracking or tracing patterns of the magnetic heads (A) and (B) in the slow reproducing operation effected at a speed reduced to a half of the normal reproducing speed;

Figure 9 shows signal waveform diagrams of signals appearing at various circuit points of the track jumping point detecting circuit shown in Figure 6 in the slow reproduction effected at the half speed;

Figure 10 shows signal waveform diagrams of signals appearing at various circuit point of the track jumping point detecting circuit shown in Figure 6 in the still reproduction mode;

Figure 11 is a block diagram showing a circuit arrangement for detecting the track jumping point in the special reproduction mode with the aid of the four pilot signals of different frequencies recorded in an intermittent manner according to another embodiment of the present invention;

Figure 12 is a plan view showing schematically and exemplarily the record tracks on which the single frequency pilot signal of a given frequency $(f_0)$ is intermittently recorded;

Figure 13 is a block diagram showing a circuit arrangement for detecting the track jumping point in the special reproduction mode with the aid of the pilot signal $(f_0)$ shown in Figure 12 according to still another embodiment of the present invention;

Figure 14 is a signal waveform diagram showing an output signal of a mixer (51) employed in the circuit shown in Figure 13;

Figure 15 is a plan view illustrating schematically an example of the intermittent recording of the single frequency pilot signal of a given frequency $(f_0)$ on the record tracks;

Figure 16 is a block diagram showing a circuit arrangement for detecting the track jumping point with the aid of the single frequency pilot signal $(f_0)$ shown in Figure 15 according a further embodiment of the present invention;

Figure 17 is a block diagram showing a circuit arrangement for fixing noise band in the special reproduction mode with the aid of JP signal produced by a track jumping point detecting circuit according to a still further embodiment of the invention;

Figure 18 is a block diagram showing a version of the circuit shown in Figure 17; and

Figure 19 is a block diagram showing, by way of example, a circuit arrangement for controlling the magnetic tape transporting speed with the aid of the JP signal produced by the track jumping point detecting circuit according to the present invention.

Now, the invention will be described in detail in conjunction with the exemplary embodiments by first taking as an example the application where the four pilot signals of different frequencies $f_1$, $f_2$, $f_3$ and $f_4$ are made use of.

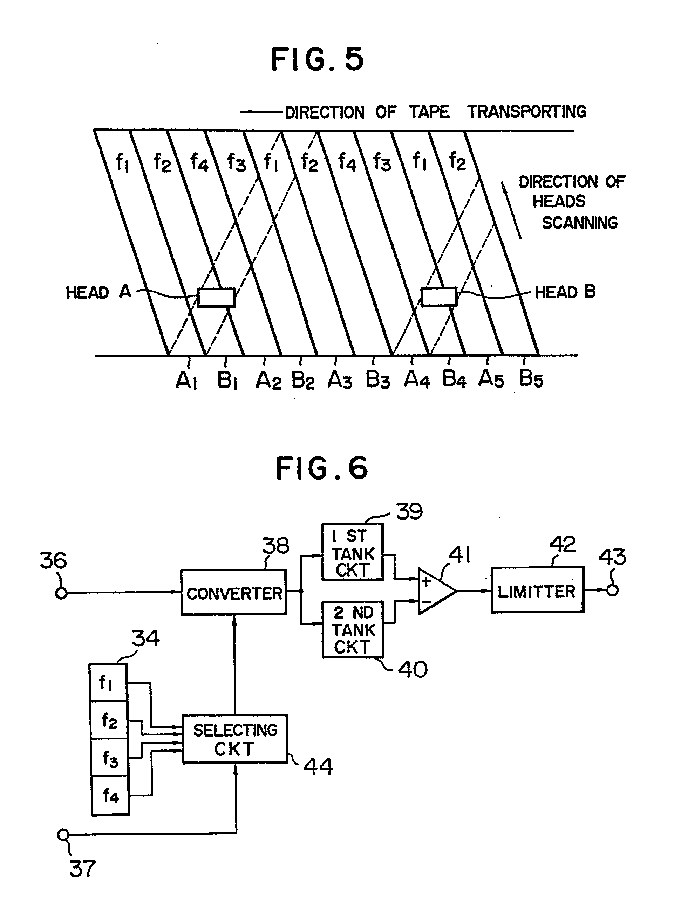

Figure 4 shows, by way of example, a circuit arrangement for recording the above mentioned pilot signals on the individual video tracks. Referring to Figure 4, a reference numeral 27 denotes an input terminal for an FM-luminance signal, 28 denotes an input terminal for a chroma signal converted to a low frequency band, 29 denotes an input terminal for a pulse signal generated in synchronism with the switching or change-over of magnetic heads, 30 denotes a first mixer, 31 denotes a second mixer, 32 denotes a recording amplifier, 33 denotes a magnetic head, 34 denotes a pilot signal generating circuit, and 35 denotes a selecting circuit. The FM-luminance signal and the low band chroma signal are mixed by the first mixer circuit 30 and subsequently supplied to the second mixer 31. On the other hand, the pilot signals $f_1$, $f_2$, $f_3$ and $f_4$ produced by the pilot signal generating circuit 34 are introduced to the selecting circuit 35 in which the pilot signals are sequentially selected in a cyclical order or row of $f_1$, $f_2$, $f_4$ and then $f_3$, for example, in response to the pulse signal applied to the input terminal 29 in synchronism with the change-over of the magnetic heads, to be subsequently supplied to the second mixer 31. In the case of the embodiment now being considered, it is assumed that the pilot signals $f_1$ and $f_4$ are selected when the magnetic head of channel A is turned on, while the pilot signals $f_2$ and $f_3$ are selected when the magnetic head of channel B is activated. The second mixer 31 serves to mix the mixed luminance FM signal and low band chroma signal with the pilot signals supplied from the selecting circuit 35. The resultant signal is fed to the magnetic head 33 through the recording amplifier 32 to be recorded on a magnetic tape.

Figure 5 illustrates, by way of example, a pattern of the video tracks having the pilot signals recorded thereon in the manner described above. In Figure 5, $A_1$, $A_2$ and so forth represent the video tracks of a channel A, while $B_1$, $B_2$ and so forth represent the video tracks of a channel B. Here, description will be made with reference to Figure 5 about the principle of detection of the track jumping points in the search reproducing operation effected at a speed six times as high as that of the normal reproduction. In general, in the high density recording/reproducing apparatus such as VTR where no guard band is employed, the azimuth recording scheme is adopted with a view to suppressing the cross-talk components derived from the adjacent video tracks. In Figure 5, the magnetic heads A and B have the same azimuth angles as those of the magnetic heads which are used in the recording on the video tracks of the channels A and B, respectively, and serves to reproduce the signals recorded on the video tracks of the channels A and B, respectively. The tracking patterns of the magnetic heads A and B are indicated by broken lines in Figure 5.

Figure 6 shows an arrangement of a track jumping point detecting circuit according to an embodiment of the invention which can be employed in combination with the apparatus described above. In Figure 6 a reference numeral 36 denotes an input terminal for the reproduced pilot signals $f_1$, $f_2$, $f_3$ and $f_4$, 37 denotes an input terminal for a pulse signal applied thereto in synchronism with the change-over of the magnetic heads A and B, 38 denotes a frequency converter, 39 denotes a first tank circuit, 40 denotes a second tank circuit, 41 denotes a differential amplifier, 42 denotes a limiter circuit, 43 denotes an output terminal for the JP signal, and 44 is a selecting circuit.

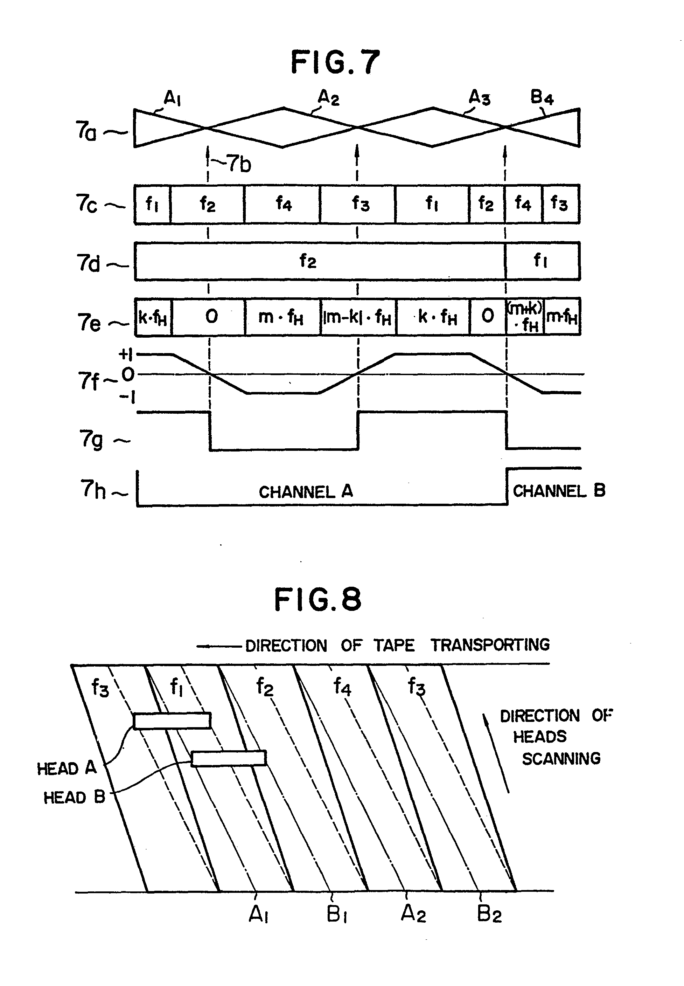

Figure 7 shows signal waveform diagrams for illustrating operations of the circuit arrangement shown in Figure 6. Referring to Figure 7, an FM-envelope waveform of the signal reproduced by the magnetic heads in the search playback or reproduction mode is illustrated at $7b$, said signal having been recorded in the manner described hereinbefore in conjunction with Figure 4. In Figure 7, symbols $A_1$, $A_2$, $A_3$ and $B_4$ represent the record tracks, respectively. Arrows $7b$ represent the track jumping points which coincide, respectively, with points (constrictions) at which magnitude of the envelope waveform $7a$ becomes minimum. It should here be mentioned that the frequencies of the pilot signals $f_1$, $f_2$, $f_3$ and $f_4$ are usually lower than that of the low-band converted chroma signal and selected at values laying in the vicinity of about 100 KHz. Under the conditions, since the azimuth effect of the magnetic head may be neglected, the pilot signals reproduced by one and the same magnetic head will be at a substantially constant level. Accordingly, the pilot signals which are reproduced at the maximum level follow the sequence illustrated at Figure $7c$ and are applied to the input terminal 36 to be supplied to the frequency converter 38. On the other hand, the pulse signal illustrated at $7h$ is applied to the input signal 37 in synchronism with the change-over of the magnetic heads to be supplied to the selecting circuit 44 as the control signal, whereby the pilot signal $f_1$, $f_2$, $f_3$ and $f_4$ produced by the pilot signal generating circuit 34 are alternately selected for every frame to be supplied to the frequency converter 38 as the carrier signals. For the carrier signals for the frequency converter 38, the pilot signal $f_2$ or $f_3$ recorded on the tracks of channel B is selected when the magnetic head for the tracks of channel A is turned on for the reproducing operation, while the pilot signal $f_1$ or $f_4$ recorded on the tracks of channel A is selected when the reproduction is carried out by the magnetic head of the channel B, as is illustrated at $7d$ in Figure 7. Accordingly, the frequency differences between the reproduced pilot signals ($7c$) and the carrier signals ($7d$) making appearance at the output of the frequency converter 38 are such as illustrated at $7e$ in Figure 7. When the tank frequencies of the first and the second tank circuits 39 and 40 shown in Figure 6 are selected at $k \cdot f_H$ and $m \cdot f_H$, respectively, the output of the differential amplifier 41 will then be what is illustrated at $7f$ in Figure 7. The output signal $7f$ of the differential amplifier 41 is caused to pass through the limiter circuit 42 for detecting the zero crossing point of the signal $7f$, which results in that the JP signal shown at $7g$ in Figure 7 is produced at the output terminal 43.

In the case of the example illustrated in Figure 5, the sequence in which the pilot signals are recorded is so selected that they are recorded in the order of $f_1$, $f_2$, $f_4$ and then $f_3$ in each cycle. In that case, it should be noted that the JP signal can be detected independent of the search speed in the search reproduction mode when the order in which the pilot signals $f_1$, $f_2$, $f_3$ and $f_4$ are selectively and sequentially extracted by the selecting circuit 44 shown in Figure 6 for each field is so set as to be of

$$f_2 \rightarrow f_1 \rightarrow f_3 \rightarrow f_4$$

in each repeated cycle.

Further, in the case of the example illustrated in Figure 5, the pilot signals may also be recorded in the cyclical sequence of

$$f_1 \rightarrow f_3 \rightarrow f_4 \rightarrow f_2.$$

In that case, it is also possible to detect the JP signal in the special reproduction mode by sequentially and selectively extracting the pilot signals through the selecting circuit 44 in the cyclical order of

$$f_2 \rightarrow f_4 \rightarrow f_3 \rightarrow f_1.$$

In the foregoing, the track jumping point detecting method has been described in conjunction with the search reproduction mode in which the magnetic heads having different azimuth angles are changed over for every channel, as is in the case of the frame reproduction. However, it is also possible to detect the track jumping point even in such search reproduction in which the magnetic heads having the same azimuth angle are used for each of the channels, as is in the case of the field reproduction. By the way, the use of the magnetic heads having the same azimuth angle for each of the channels in the search reproduction is practically adopted in the helical scan type VTR or the like which is provided with two magnetic heads whose azimuth angles differ from each other and one magnetic head having the same azimuth angle as either one of said two magnetic heads.

When the pilot signal $f_2$ or $f_3$ recorded on the track of channel B is reproduced by the magnetic head having the same azimuth angle as that of the magnetic head associated with the channel track A to be utilized as the carrier signal supplied to the frequency converter or alternatively when the pilot signal $f_1$ or $f_4$ recorded on the channel track A is reproduced with the same azimuth angle as that of the magnetic head of the channel track B to be utilized as the carrier signal, it is possible to obtain the JP signal by using constantly one and the same frequency in the same manner as in the case of the circuit shown in Figure 6 without any need for exchanging the carrier signal for every channel.

In the foregoing, the principle of the track jumping point detecting method according to the invention has been described in conjunction with the search reproduction or playback. It should be noted that the invention can equally be applied to the detection of the track jumping point in the slow reproduction as well.

Figure 8 shows an example of the tracking patterns of the reproducing heads in the slow playback operation effected at a speed corresponding to a half of the normal reproducing speed. The recording of the pilot signals $f_1$, $f_2$, $f_3$ and $f_4$ is carried out in the same manner as described hereinbefore in conjunction with Figure 4. In Figure 8, the tracking pattern of the magnetic head A is indicated by broken lines, while that of the magnetic head B is indicated by single-dotted broken lines. The magnetic heads A and B are destined to reproduce mainly the information on the channel tracks A and B, respectively.

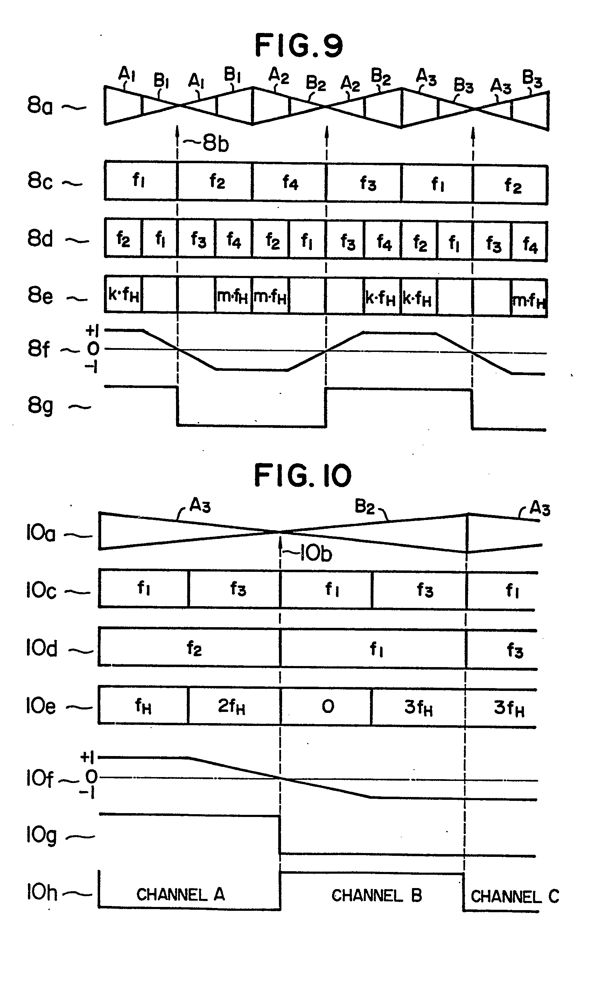

The jumping point detecting circuit for the slow reproduction may be realized in the identical arrangement with the one shown in Figure 6. Figure 9 shows signal waveform diagrams to illustrate the track jumping point detecting operation in the slow reproduction operation. In Figure 9, the reproduced FM-envelope signal waveform is shown at 8a. It will be seen that because of the azimuth effect, the track jumping points 8b are located at points where the reproduced FM-envelope signal waveform is constricted, as is in the case of the search reproduction. The reproduced pilot signals $f_i$ (i=1, 2, 3, 4) having the maximum signal levels make appearance in the sequence shown at 8c in Figure 9. The frequency sequence of the carrier signals produced by the selecting circuit 44 is illustrated at 8d, while the frequency difference signal appearing at the output of the converter 38 is illustrated at 8e in Figure 9. Further, there is shown at 8f the output signal of the differential amplifier 41. Thus, the JP signal is obtained at the output of the limiter circuit 42, as shown at 8g in Figure 9.

It should be mentioned that the frequency of the carrier signal 8d produced by the selecting circuit is selected in the same manner as in the case of the search reproduction operation. That is, when the magnetic head A is turned on, the pilot signal of the frequency $f_2$ or $f_3$ is selected, while the frequency $f_1$ or $f_4$ is selected when the magnetic head B is turned on. Further, the frequency sequence of the carrier signal 8d cyclically repeated for every field is determined in dependence on the sequence in which the pilot signal frequencies are recorded in the same manner, as is in the case of the search reproduction operation. In this way, the JP signal can also be detected in other slow reproduction operations in which different tape transporting speeds are used.

Next, description will be made on another embodiment of the invention in which the inventive principle is applied to the still reproduction operation by referring to Figure 10 on the assumption that relationship between the magnetic heads A and B and the record tracks is such as shown in Figure 1B and that the pilot signal $f_1$ is recorded on the track $A_3$ with the pilot signal $f_3$ being recorded on the track $B_2$ in multiple. Referring to Figure 10, the FM-envelope signal waveform is shown at 10a. As will be seen, the track jumping points 10b are located at every minimum point (constricted point) of the FM-envelope signal waveform. The most significant frequencies of the reproduced pilot signals follow the sequence shown at 10c. The carrier signal produced by the selecting circuit 44 is shown at 10d. The difference frequency signal appearing at the output of the frequency converter 38 is shown at 10e, while the output signal of the differential amplifier 41 is shown at 10f. The JP signal shown at 10g can thus be obtained at the output of the limiter circuit 42. Finally, the pulse signal generated in synchronism with the switching of the magnetic heads is shown at 10h.

In the still reproduction operation, the pilot

signals $f_1$, $f_2$, $f_3$ and $f_4$ are exchanged for every channel in the sequence which depends on the recording sequence in the same manner as is in the case of the search reproduction operation.

In the above description of the track jumping point detecting method with reference to Figure 10, it has been assumed that the magnetic heads having the different azimuth angles, respectively, are changed over to each other at every channel in the still reproduction, as is, for example, in the case of the frame reproduction. However, the invention can equally be applied to the detection of the track jumping points in the reproduction where the magnetic heads of the same azimuth angle are used for the respective channel, as is, for example, in the case of the field reproduction.

More specifically, when any one of combinations of the pilot frequencies $f_2$ and $f_1$, $f_2$ and $f_4$, $f_3$ and $f_3$ and $f_4$ is used as the carrier signal supplied to the frequency converter 38 shown in Figure 6, e.g. when the frequencies $f_2$ and $f_1$ are alternately exchanged with each other for every channel, the JP signal indicating the track jumping point can be obtained. With the phrase "track jumping point" used in conjunction with the field reproduction, it is intended to designate the switching point interposed between the two fields one of which is reproduced from the record track $A_3$ by means of the magnetic head A, while the other is also reproduced from the succeeding track $A_3$ by the same head A (refer to Figure 1B).

As will be appreciated from the foregoing description, it is possible according to the teaching of the present invention to detect the track jumping point in all the special reproduction or playback modes without any special control or restriction being imposed in dependence on the selected mode. By utilizing the JP signal thus obtained as the control signal for the first switch circuit 8 shown in Figure 3, the line sequence of the chroma signal can be stably maintained, whereby possibility of decolorization can be excluded.

In the case of the embodiment of the invention described so far, it is assumed that the pilot signals $f_1$, $f_2$, $f_3$ and $f_4$ are recorded over the whole regions of the record tracks. However, the invention is not restricted to such recording scheme. The invention can also be realized by recording these pilot signals $f_1$, $f_2$, $f_3$ and $f_4$ intermittently, for example, during the horizontal synchronizing signal period or front porch period and utilizing the pilot signals reproduced intermittently in the reproducing operations.

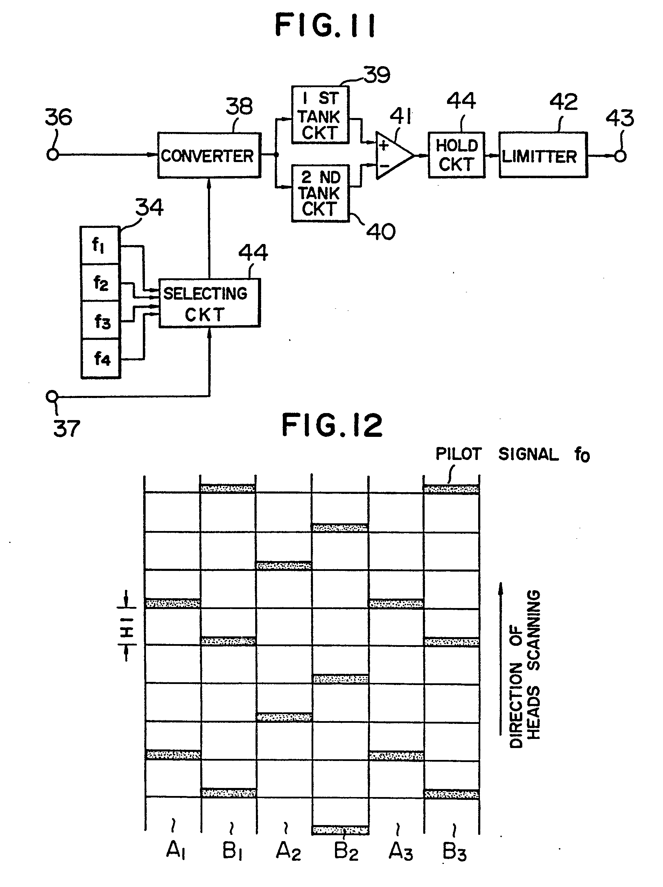

Figure 11 shows an exemplary embodiment of the circuit for detecting the track jumping points in the reproduction of the intermittently recorded pilot signals $f_1$ to $f_4$ (not shown). The circuit arrangement shown in Figure 11 differs from the one shown in Figure 6 in respect that a hold circuit 44 is disposed on the output side of the differential amplifier 41, which hold circuit 44 is adapted to gate the output signal of the differential amplifier 41 only during the pilot signal detecting period and otherwise hold the peak level of the output signal of the differential amplifier 41 detected during the detection period. With this circuit arrangement, it is possible to detect the track jumping point with high accuracy, as is in the case of the preceding embodiments of the invention.

Next, as the most typical example of the intermittent recording of the pilot signals, description will be made of an embodiment of the invention in which a single pilot signal of a given frequency $f_0$ is intermittently recorded on the tracks.

Figure 12 shows an example of the track pattern in which the single frequency pilot signal $f_0$ is intermittently recorded on a magnetic tape. In this figure, symbols $A_1$, $A_2$ and $A_3$ represent the record tracks belonging to the channel A, while $B_1$, $B_2$ and $B_3$ represent the record tracks belonging to the channel B. Thick solid line segments represent the pilot signal $f_0$ recorded intermittently every fourth horizontal period H on each of the record tracks. Needless to say, control for the recording of the pilot signal has been so made that the pilot signal record pattern illustrated in Figure 12 can be obtained.

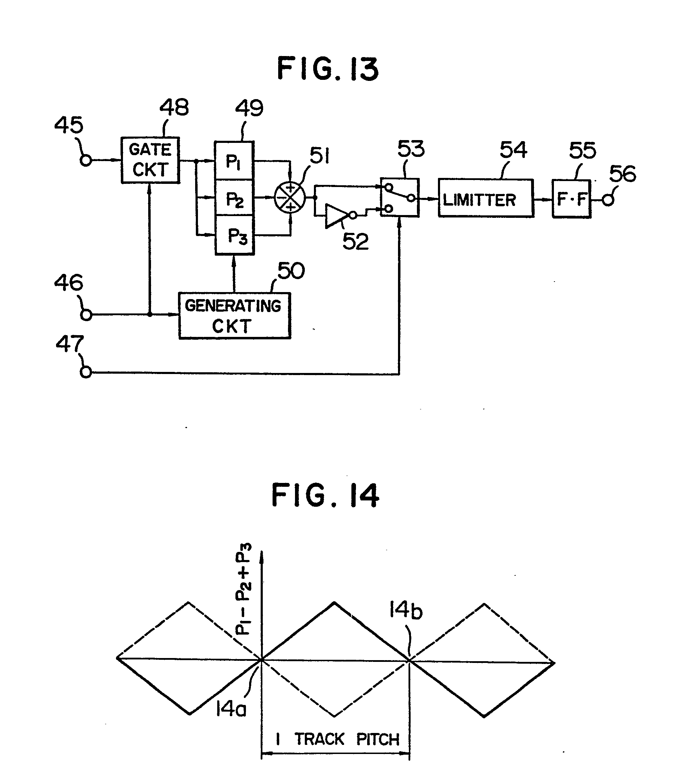

Figure 13 shows an exemplary embodiment of the circuit for detecting the track jumping point in reproduction of the record pattern illustrated in Figure 12. Referring to Figure 13, a reference numeral 45 denotes an input terminal for the reproduced pilot signal, 46 is an input terminal for a control signal which is used for gating the pilot signal, 47 is an input terminal for the pulse signal generated in synchronism with the change-over of the magnetic heads, 48 is a gate circuit, 49 is a hold circuit, 50 is a circuit for generating a select signal, 51 is a mixer, 52 is an inverter, 53 is a switch circuit, 54 is a limiter circuit, 55 is a flip-flop and 56 denotes an output terminal for the JP signal.

For elucidating the principle on the basis of which the track jumping point detecting operation can be accomplished with the circuit arrangement shown in Figure 13, it is assumed that the magnetic head of the channel A is in the course of reproducing the record track $A_2$ as the main track in the search reproduction mode. The pilot signal $f_0$ thus reproduced are intermittently gated through the gate circuit 48. After elapse of 1 H from the reproduction of the pilot signal of the track $A_2$, the level of the pilot signal reproduced from the record track $B_2$ is gated through the gate circuit 48 to be held at a stage $P_1$ of the hold circuit 49. After the succeeding period of 1 H, the level of the pilot signal reproduced from the record track $B_1$ is gated to be held at a stage $P_2$ of the hold circuit 49. In the similar manner, the output level of the pilot signal reproduced from the record track $A_1$ or $A_3$ and gated through the gate circuit 48 is held at a stage $P_3$ of the hold circuit 49. The signals held at the stages $P_1$, $P_2$ and $P_3$ (these signals are also represented by $P_1$, $P_2$ and $P_3$) are supplied to the mixer 51 to be arithmetically processed in accordance with $P_1 - P_2 + P_3$, the

result of the arithmetic operation being fed to the limiter circuit 54 by way of the switch circuit 53.

In Figure 14, there is illustrated the arithmetically determined output level $(P_1-P_2+P_3)$ and deviations of the magnetic heads from the respective main tracks. Referring to Figure 14, a point 14a corresponds to the case in which the magnetic head is located at the center of the record track $A_2$, while a point 14b represents the case in which the magnetic head is positioned at the center of the record track $B_2$, wherein the distance between the points 14a and 14b corresponds to one track pitch. Further, reproduction by the magnetic head for the channel A is represented by a solid line, while that of the magnetic head for the channel B is represented by a broken line. When the arithmetically determined output level is supplied through the limiter circuit 54 to the flip-flop 55 which is set in response to the falling edge of the input signal, there can be extracted from the output terminal 56 a signal representative of the point at which the magnetic head is located on the record track $B_2$, i.e. the JP signal representative of the detected track jumping point. In reproduction by the magnetic head of the channel B, the output signal from the mixer 51 is supplied to the limiter circuit 50 after having been inverted through the inverter 52.

In this way, the track jumping point can be detected with reliability by making use of the pilot signal of the single frequency $(f_0)$.

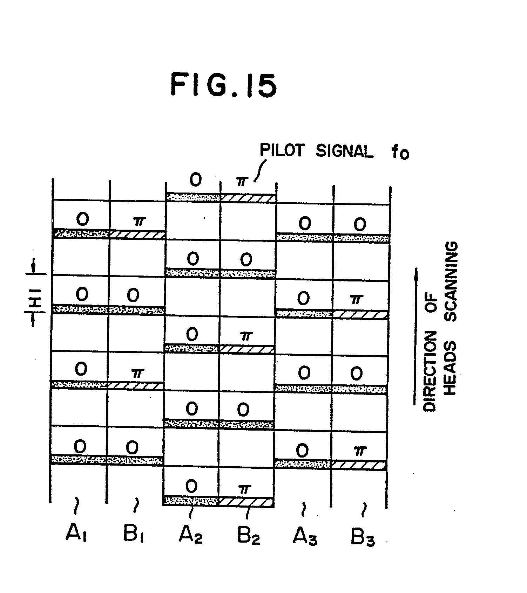

Figure 15 shows another example of track pattern in which the pilot signals of the single frequency $f_0$ are recorded. Referring to the figure, it will be seen that the pilot signal $f_0$ is intermittently recorded on each of the tracks periodically at an interval equal to two horizontal periods (2 H) and that the pilot signals each represented by a thick solid line are, respectively, out of phase with the pilot signal each represented by a hatched line or stripe. Of course, control has been previously so made in the recording operation that the pattern of the recorded pilot signal illustrated in Figure 15 can be obtained.

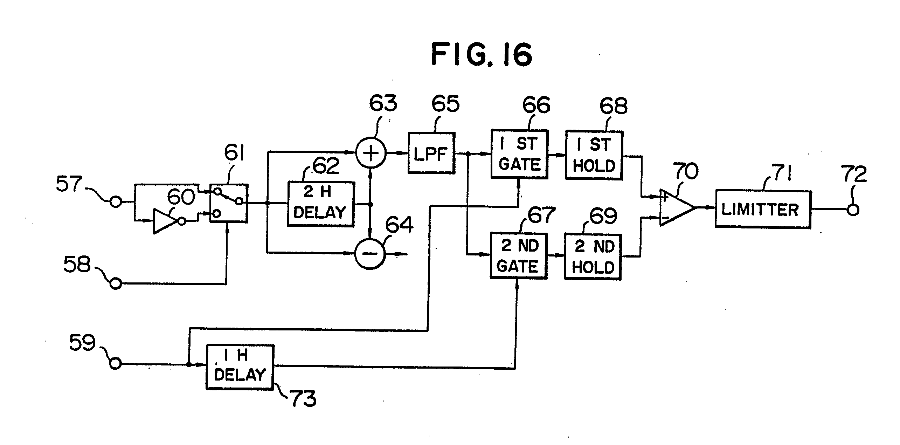

Figure 16 shows the track jumping point detecting circuit according to a further embodiment of the present invention which is adapted to be employed for the reproduction of the record pattern shown in Figure 15. In Figure 16, a reference numeral 57 denotes an input terminal for the reproduced pilot signals, 58 denotes an input terminal for the pulse signal applied thereto in synchronism with the switching or the changeover of the magnetic heads, 59 denotes an input signal for a gate control signal for gating the pilot signal of the period of 2 H, 60 denotes an inverter circuit, 61 denotes a switch circuit, 62 denotes a delay line exhibiting a delay of 2 H, 63 denotes an adder, 64 denotes a subtracter, 65 denotes a low-pass filter or LPF, 66 denotes a first gate circuit, 67 denotes a second gate circuit, 68 denotes a first hold circuit, 69 denotes a second hold circuit, 70 denotes a differential amplifier, 71 denotes a limiter circuit, 72 denotes an output terminal for the JP signal and 73 denotes a 1 H-delay circuit.

Elucidating the principle on the basis of which the track jumping points can be detected with the circuit arrangement shown in Figure 16 for the record pattern illustrated in Figure 15, it is assumed that the magnetic head of the channel A is reproducing the record track $A_2$ as the main track in the search reproduction mode. At that time, the reproduced pilot signal applied to the input terminal 57 is supplied through the switch circuit 61 to a 2 H-comb filter constituted by the 2 H-delay line 62, the adder 63 and the subtracter 64. In this conjunction, the pilot signal reproduced from the tracks of the channel A makes appearance at the output of the adder 63, while the pilot signal reproduced from the tracks of the channel B is derived from the output of the subtracter 64. The output signal from the adder 63 is supplied to the inputs of the first and second gate circuit 66 and 67 through the LPF 65. The signal inputted to the first gate circuit 66 is gated therethrough under the control of the gate signal of the period 2 H applied to the input terminal 59, while the signal inputted to the second gate circuit 67 is gated therethrough under the control of the gate signal (59) imparted with the delay of 1 H by the 1 H-delay line 73. The outputs from both the gate circuits 66 and 67 are supplied to the first and second hold circuits 68 and 69, respectively. In this way, the peak value of the pilot signal reproduced from the record track $A_2$ is held by the first hold circuit 68, while that of the pilot signal reproduced from the record track $A_1$ or $A_3$ is held by the second hold circuit 69. The output signals of the peak hold circuits 68 and 69 are applied to both inputs of the differential amplifier 70, resulting in the output signal of positive polarity from the latter when the magnetic head is located along the record track $A_2$ and the output signal of negative polarity when the magnetic head is located on the record track $A_3$. Thus, by passing the output signal of the differential amplifier 70 through the limiter circuit 71, the JP signal similar to that shown in Figure 7 at 7g can be taken out at the output terminal 72. When the scanning magnetic head is for the channel B, the pilot signal reproduced from the associated track is supplied to the aforementioned 2 H-comb filter through the inverter circuit 60, whereby the JP signal can be detected in the similar manner.

The description made so far has concerned the detection of the track jumping point with the aid of the pilot signals of four different frequencies $(f_1, f_2, f_3, f_4)$ or the pilot signal of one frequency $(f_0)$ respectively. However, it is a matter of course that the invention can be carried out by using the pilot signals of three or two different frequencies. Further, in the foregoing description, it has been assumed that the chroma signal can be normally reproduced in the special playback modes such as the search reproduction, still reproduction or the like. In the following, another variety of application of the invention will be described.

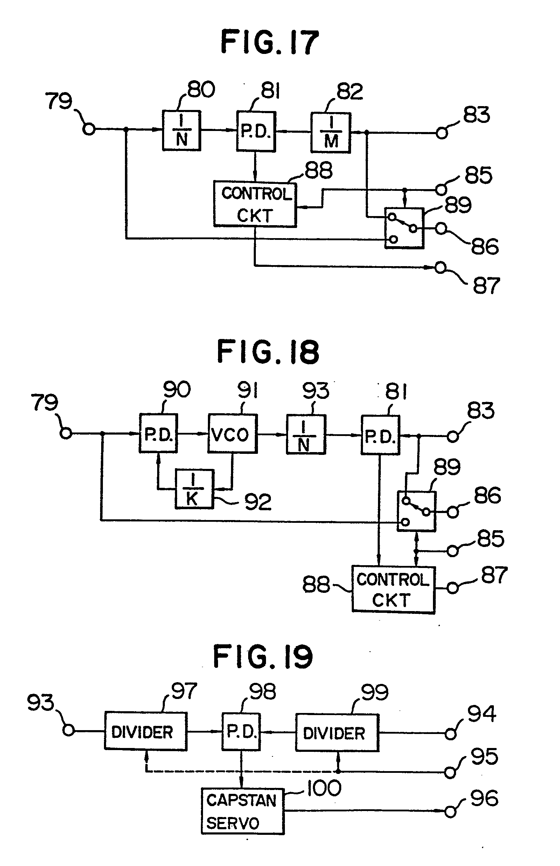

Figure 17 shows a circuit which is designed for improving the quality of the image or picture reproduced in the special reproduction modes by making use of the track jumping point detecting signal according to another embodiment of the present invention.

In Figure 17, a reference numeral 79 denotes an input terminal for the JP signal which can be extracted from the output terminal 43 of the circuit shown in Figure 6 and represents the detection of the track jump, 80 denotes a first frequency divider circuit, 81 denotes a phase detection circuit, 82 denotes a second frequency divider circuit, 83 denotes an input terminal for the control signal applied thereto in synchronism with the change-over between the magnetic heads, 85 denotes an input terminal for a control signal which indicates whether or not the mode is of the still reproduction, 86 denotes an output terminal for the JP signal representative of the track jump, 87 denotes an output terminal coupled to a capstan servo circuit (not shown), and 88 denotes a control circuit. With the circuit arrangement mentioned above, the magnetic tape transporting speed for the search reproduction mode is phase-locked to the field or frame period by controlling the capstan servo circuit with a signal derived through the phase comparison of the JP signal applied to the input terminal 73 with the control signal applied to the input terminal 83 in synchronism with the change-over of the magnetic heads, whereby the noise band can be essentially fixed on the reproduced picture to improve the quality thereof for visual observation.

Further, in the case of the still reproduction, the detection signal outputted from the phase detection circuit 81 is so controlled by the control signal applied to the input terminal 85 through the control circuit 88 that the JP signal be located in the vicinity of the vertical synchronizing signal, to thereby confine the noise band to an end or edge of the reproduced picture, whose quality can thus be improved for visual observation.

Further, when the JP signal applied to the input terminal 83 in synchronism with the change-over of the magnetic head is made use of in the still reproduction with the JP signal applied to the input terminal 79 being used in other reproduction modes as the control signal for correcting the horizontal skew phenomenon as well as the decolorization phenomenon in the PAL system as described hereinbefore, the accuracy or precision required for the correction can be enhanced particularly in the still reproduction mode. To this end, the switch circuit 89 is used for changing-over the JP signals supplied to the input terminals 83 and 79 with each other.

Figure 18 shows an arrangement of the circuit for improving the picture quality in the special reproduction mode according to a further embodiment of the present invention.

In Figure 18, a reference numeral 90 denotes a phase detection circuit, 91 denotes a voltage controlled oscillator or VCO, and 92 and 93 denote frequency divider circuits, respectively. Other components are same as those shown in Figure 17. With the circuit arrangement shown in Figure 18, the JP signal derived, for example, from the circuit shown in Figure 6 is supplied to a phase locked loop or PLL circuit which is constituted by the phase detection circuit 90, the VCO 91 and the frequency divider circuit 92, to thereby stabilize the JP signal for the purpose of enhancing the effect attained with the circuit arrangement shown in Figure 17. Further, in the case of the embodiment shown in Figure 18, the output signal of the VCO 91 can be utilized as the control signal for correcting the horizontal skew phenomenon and the decolorization phenomenon in the PAL system to attain the excellent result, although details of the circuit configuration to this end is not shown.

Figure 19 shows still another application of the present invention.

In this figure, a reference numeral 93 denotes an input terminal for the JP signal detected according to the teaching of the present invention and indicating the track jumping point, 94 denotes an input terminal for a capstan FG pulse signal mentioned below, 95 denotes an input terminal for a control signal mentioned below, 96 denotes an output terminal coupled to a capstan motor drive circuit, 97 and 99 denote frequency divider circuits, respectively, 98 denotes a phase detection circuit, and 100 denotes a capstan servo circuit. With this circuit arrangement, the FG pulse signal representative of the speed of the capstan motor is compared with the JP signal in respect to the phase for thereby controlling the magnetic tape transporting speed. It is then easily possible to change the magnetic tape transporting speeds for every special reproduction operation by correspondingly changing at least the frequency dividing factor of either the frequency divider circuit 97 or 99 with the control signal applied to the input terminal 95.

In the foregoing description of the preferred embodiments of the invention, the pilot signal is utilized for the detection of the track jumping points in the special reproduction or playback modes. It goes however without saying that the pilot signal can also be utilized additionally for realizing the automatic tracking which per se has heretofore been known and of which description is omitted.

It will now be appreciated that the track jumping points of the magnetic heads in the special reproduction operation such as the search reproduction, the still reproduction or the like reproduction mode can be detected with an improved accuracy in a facilitated manner to assure an improved quality of the reproduced pictures according to the present invention. Further, since these pilot signals can be additionally utilized as those used for the automatic tracking in the normal reproduction, the invention can be realized inexpensively.

## Claims

1. For use in a magnetic recording and reproducing apparatus in which information is recorded on a magnetic tape along tracks ($A_i$, $B_i$) and reproduced through helical scanning by at least two rotating heads (A, B) having respective azimuth angles differing from each other, a method of detecting track jumping points (8b) representative of timing at which each of said magnetic heads (A, B) is shifted to an immediately adjacent track or a next adjacent track located by one track away in special reproductions modes, comprising the steps of:

a) recording a pilot signal on each of said record tracks ($A_i$, $B_i$) by means of said magnetic heads (A, B) whereby the recording of said pilot signal is made with frequencies, at respective positions in the longitudinal direction of the recorded track and/or with phases periodically differing from one to another track;

b) reproducing said pilot signal from said recorded tracks by means of said magnetic heads; and

c) determining the track jumping points (8b) by processing the pilot signals reproduced from a plurality of adjacent tracks.

2. A method of detecting the track jumping point in a magnetic recording and reproducing apparatus according to Claim 1, wherein recording of said pilot signal on at least four adjacent record tracks (e.g. $A_1$, $B_1$, $A_2$, $B_2$) is made with frequencies differing from one to another track, at positions in the longitudinal direction of the record track differing from one to another track and/or with phases differing from one to another track, said pilot signal being periodically recorded at an interval corresponding to said at least four adjacent record tracks.

3. A method of detecting the track jumping point in a magnetic recording and reproducing apparatus according to Claim 2, wherein said pilot signal includes four frequency signals differing from one another and periodically recorded at the interval corresponding to the four adjacent record tracks.

4. A method of detecting the track jumping point in a magnetic recording and reproducing apparatus according to Claim 3, wherein said four different frequency signals recorded periodically as said pilot signal at the interval corresponding to the four adjacent record tracks and represented by $f_1$, $f_2$, $f_3$ and $f_4$, respectively, are related to one another in accordance with

$$f_2 - f_1 \simeq f_4 - f_3 \simeq k \cdot f_H$$

$$f_3 - f_1 \simeq f_4 - f_2 \simeq m \cdot f_H$$

where $k \neq m$ and $f_H$ represents a horizontal scanning frequency, and recorded in a predetermined sequence, and wherein said different frequency signals ($f_1$, $f_2$, $f_3$, $f_4$) as reproduced are subjected to frequency conversion with predetermined carrier signals to extract said components

$m \cdot f_H$ and $k \cdot f_H$, both the components being subtracted from each other to thereby detect the track jumping points.

5. A method of detecting the track jumping point in a magnetic recording and reproducing apparatus according to Claim 4, said frequency signals $f_1$, $f_2$, $f_3$, $f_4$ being recorded in the sequence of $f_1$, $f_2$, $f_4$ and $f_3$ or $f_1$, $f_3$, $f_4$ and $f_2$, and said predetermined carrier signals including signals of same frequencies as those of said pilot frequency signal, wherein

the frequency signal $f_2$ or $f_3$ is used as the carrier signal for the pilot frequency signals reproduced by the magnetic head (A) which has recorded said pilot frequency signal $f_1$ or $f_4$ among said two magnetic heads (A, B) having the different azimuth angles, while the frequency signal $f_1$ or $f_4$ is used as the carrier signal for the pilot frequency signals reproduced by the other magnetic head (B) which has recorded the pilot frequency signal $f_2$ or $f_3$.

6. A method of detecting the track jumping point in a magnetic recording and reproducing apparatus according to Claim 2, wherein said pilot signal includes a single frequency signal ($f_0$) recorded periodically on said record tracks ($A_i$, $B_i$) at an interval corresponding to said four adjacent record tracks at record positions in the longitudinal direction of the record track which differ from one to another track and/or with phases differing from one to another track.

7. A method of detecting the track jumping point in a magnetic recording and reproducing apparatus according to Claim 6, wherein said pilot signal of said single frequency ($f_0$) is intermittently recorded on every four adjacent tracks periodically at an interval of 2 H where H represents a horizontal period, the position at which said pilot signal ($f_0$) is recorded on the adjacent two of said four adjacent tracks being deviated by 1 H from the position at which said pilot signal is recorded on the other two adjacent tracks, and the phase of the pilot signal recorded on the two record tracks which are not adjacent to each other is inverted periodically at the interval of 2 H.

8. A method of detecting the track jumping point in a magnetic recording and reproducing apparatus according to Claim 7, wherein the reproduced pilot signal and a signal derived by delaying said reproduced pilot signal by 2 H are added or subtracted, the signal resulting from the addition or subtraction being sampled at a predetermined time, the sampled signal thus obtained being compared with a signal sampled from said resulting signal with a delay of 1 H relative to said sampling at said predetermined time.

9. For use in a magnetic recording and reproducing system in which information is recorded on a magnetic tape along tracks and reproduced through helical scanning with at least two rotating heads having respective azimuth angles differing from each other, an apparatus for detecting track jumping points (8b) representative of timing at which each of said magnetic heads (A, B) jumps to an immediately adjacent track or a next adjacent track located by one track away in special preproducing modes, comprising: pilot signal generating means for producing pilot signals to be recorded on each of said record tracks by means of said magnetic heads (A, B) in recording operation; and track jump timing detecting means supplied sequentially with said pilot signals reproduced by said magnetic heads (A, B) in the reproducing operation for processing said pilot signals reproduced from a plurality of adjacent recorded tracks to thereby detect said track jumping points (8b).

10. An apparatus for detecting track jumping point in the magnetic recording and reproducing system according to Claim 9, wherein said pilot signal generating means (30, 31, 34, 35, 33) produces said pilot signals of four different frequencies $f_1$, $f_2$, $f_3$ and $f_4$ of which relationships are given by

$$f_2-f_1 \simeq f_4-f_3 \simeq k \cdot f_H$$

$$f_3-f_1 \simeq f_4-f_2 \simeq m \cdot f_H$$

where $k \neq m$ and $f_H$ represents a horizontal scan frequency, said pilot signals being recorded on each of said record tracks in a predetermined sequence, while said track jump timing detecting means including a frequency converter (38) for effecting frequency conversion of said pilot signals with predetermined carrier signals ($f_1$, $f_2$, $f_3$, $f_4$), means (39, 40) for extracting the components $m \cdot f_H$ and $k \cdot f_H$, respectively, from the frequency converted signals, means (41) for determining a difference between said components $m \cdot f_H$ and $k \cdot f_H$, and limiter means (42) supplied with the output signal produced by the last mentioned means (41).

11. An apparatus for detecting track jumping point in the magnetic recording and reproducing system according to Claim 9 or 10, further comprising a PLL (phase locked loop) circuit (90, 91, 92) supplied with the output signal derived from said track jump timing detecting means, phase comparison means (81) for comparing the phase of the output signal from said PLL circuit with that of a control signal generated in synchronism with the change-over of said magnetic heads, and means (88) for applying the output signal of said phase comparison means to a capstan servo circuit.

**Patentansprüche**

1. Zum Gebrauch in einer magnetischen Aufzeichnungs- und Wiedergabevorrichtung, in der Information auf einem Magnetband entlang Spuren ($A_i$, $B_i$) aufgezeichnet ist und wiedergegeben wird durch schraubenförmiges Abtasten durch mindestens zwei rotierende Köpfe (A, B), die jeweilige azimutale Winkel haben, die sich voneinander unterschieden, ein Verfahren zum Erfassen von Spurwechselpunkten (8b), die bezeichnend sind für den Zeitpunkt, an dem jeder der Magnetköpfe (A, B) zu einer direkt benachbarten Spur oder nächst benachbarten Spur, die ein Spur weiter entfernt liegt, geschoben wird in zpeziellen Wiedergabebetriebsarten, das die folgenden Schritte aufweist:

a) Aufzeichnen eines Pilotsignals auf jeder der Aufzeichnungsspuren ($A_i$, $B_i$) mittels der Magnetköpfe (A, B), wobei das Aufzeichnen dieses Pilotsignals mit Frequenzen vorgenommen wird, an jeweiligen Positionen in der Längsrichtung der aufgezeichneten Spur und/oder mit Phasen, die periodisch von einer zu einer anderen Spur differieren,

b) Wiedergeben dieses Pilotsignals von den aufgezeichneten Spurenmittels der Magnetköpfe und

c) Bestimmen des Spurwechselpunktes (8b) durch Verarbeiten der Pilotsignale, die von einer Vielzahl von benachbarten Spuren wiedergegeben werden.

2. Verfahren zum Erfassen des Spurwechselpunktes in einer magnetischen Aufzeichnungs- und Wiedergabevorrichtung gemäß Anspruch 1, worin Aufzeichnen dieses Pilotsignals auf mindestens vier benachbarten Aufzeichnungsspuren (z.B. $A_1$, $B_1$, $A_2$, $B_2$) gemacht wird mit Frequenzen, die sich von einer zu einer anderen Spur unterscheiden, an Positionen in Längsrichtung auf der Aufzeichnungsspur, die von einer zu einer anderen Spur differiert und/oder mit Phasen, die von einer zu einer anderen Spur differieren, wobei dieses Pilotsignal periodisch aufgezeichnet wird in einem Intervall, das diesen wenigstens vier benachbarten Aufzeichnungsspuren entspricht.

3. Verfahren zum Erfassen des Spurwechselpunktes in einer magnetischen Aufzeichnungs- und Wiedergabevorrichtung gemäß Anspruch 2, worin dieses Pilotsignal vier Frequenzsignale aufweist, die sich voneinander unterscheiden und periodisch aufgezeichnet sind in dem Intervall, das den vier benachbarten Aufzeichnungsspuren entspricht.

4. Verfahren zum Erfassen des Spurwechselpunktes in einer magnetischen Aufzeichnungs- und Wiedergabevorrichtung gemäß Anspruch 3, worin diese vier unterschiedlichen Frequenzsignale, die periodisch als dieses Pilotsignal in dem Intervall, das den vier benachbarten Aufzeichnungsspuren entspricht, aufgezeichnet sind und die jeweilis dargestellt werden durch $f_1$, $f_2$, $f_3$ und $f_4$, miteinander in Beziehung gesetzt sind in Übereinstimmung mit

$$f_2-f_1 \simeq f_4-f_3 \simeq k \cdot f_H$$

$$f_3-f_1 \simeq f_4-f_2 \simeq m \cdot f_H$$

worin $k \neq m$ und $f_H$ eine horizontale Abtastfrequenz darstellt und aufgezeichnet werden in einer vorher bestimmten Folge, und worin diese unterschiedlichen Frequenzsignale ($f_1$, $f_2$, $f_3$, $f_4$), wie sie wiedergegeben werden, einer Frequenzumwandlung unterworfen werden mit vorher bestimmten Trägersignalen, um diese Kompo-

nenten $m \cdot f_H$ und $k \cdot f_H$ herauszuziehen, worin beide Komponenten voneinander abgezogen werden, um dadurch die Spurwechselpunkte zu erfassen.

5. Verfahren zum Erfassen des Spurwechselpunktes in einer magnetischen Aufzeichnungs- und Wiedergabevorrichtung gemäß Anspruch 4, wobei die Frequenzsignale $f_1$, $f_2$, $f_3$, $f_4$ aufgezeichnet werden in der Folge von $f_1$, $f_2$, $f_4$ und $f_3$ oder $f_1$, $f_3$, $f_4$ und $f_2$ und diese vorher bestimmten Trägersignale Signale derselben Frequenzen aufweisen wie diese der Pilotfrequenzsignale, wobei das Frequenzsignal $f_2$ oder $f_3$ gebraucht wird als Trägersignal für die Pilotfrequenzsignale, die von dem Magnetkopf (A) wiedergegeben werden, der dieses Pilotfrequenzsignal $f_1$ oder $f_4$ entlang der beiden Magnetköpfe (A, B), die verschiedene azimutale Winkel haben, aufgezeichnet hat, während das Frequenzsignal $f_1$ oder $f_4$ gebraucht wird als Trägersignal für die Pilotfrequenzsignale, die von dem anderen Magnetkopf (B) wiedergegeben werden, der das Pilotfrequenzsignal $f_2$ oder $f_3$ aufgezeichnet hat.

6. Verfahren zum Erfassen des Spurwechselpunktes in einer magnetischen Aufzeichnungs- und Wiedergabevorrichtung gemäß Anspruch 2, worin das Pilotsignal ein Einzelfrequenzsignal ($f_0$) aufweist, das periodisch auf den Aufzeichnungsspuren ($A_i$, $B_i$) in einem Intervall aufgezeichnet ist, das den vier benachbarten Aufzeichnungsspuren in Aufzeichnungslage in der Längsrichtung der Aufzeichnungsspur entspricht, die sich von einer zu einer anderen Spur unterscheidet und/oder mit Phasen, die sich von einer zu einer anderen Spur unterschieden.

7. Verfahren zum Erfassen des Spurwechselpunktes in einer magnetischen Aufzeichnungs- und Wiedergabevorrichtung gemäß Anspruch 6, worin das Pilotsignal der Einzelfrequenz ($f_0$) zwischenzeitlich aussetzend aufgezeichnet ist auf jenen vier benachbarten Spuren periodisch in einem Intervall von 2 H, wobei H eine horizontale Periode darstellt, wobei die Position, an der das Pilotsignal ($f_0$) aufgezeichnet ist, auf den benachbarten zwei von diesen vier benachbarten Spuren veränder wird durch 1 H von der Position, an der das Pilotsignal aufgezeichnet ist auf den anderen beiden benachbarten Spuren, und die Phase des Pilotsignals, das auf den beiden Aufzeichnungsspuren aufgezeichnet ist, die nicht miteinander benachbart sind, periodisch im Intervall von 2 H invertiert wird.

8. Verfahren zum Erfassen des Spurwechselpunktes in einer magnetischen Aufzeichnungs- und Wiedergabevorrichtung gemäß Anspruch 7, worin das wiedergegebene Pilotsignal und ein Signal, das durch Verzögerung des wiedergegebenen Pilotsignals durch 2 H erhalten wird, addiert oder subtrahiert werden, wobei das Signal, das von der Addition oder Subtraktion resultiert, abgetastet wird zu einer vorherbestimmten Zeit, und das abgetastete Signal, das so erhalten wird, verglichen wird mit einem Signal, das von dem resultierenden Signal abgetastet wird, mit einer Verzögerung von 1 H in Bezug auf die Abtastung zu dieser vorherbestimmten Zeit.

9. Zum Gebrauch in einem magnetischen Aufzeichnungs- und Wiedergabesystem, in dem Information aufgezeichnet wird auf einem Magnetband entlang Spuren und wiedergegeben wird durch schraubenförmiges Abtasten mit mindestens zwei rotierenden Köpfen, die jeweils azimutale Winkel haben, die sich voneinander unterscheiden, eine Vorrichtung zum Erfassen von Spurwechselpunkten (8b), die bezeichnend sind für den Zeitpunkt, an dem jeder der Magnetköpfe (A, B) zu einer direkt benachbarten Spur oder einer nächst benachbarten Spur springt, die eine Spur weiter entfernt gelegen ist, in speziellen Vorerzeugungsbetriebsweisen, die aufweist: Pilotsignalerzeugungseinrichtungen zum Erzeugen von Pilotsignalen, die auf jeder der Aufzeichnungsspuren aufgezeichnet werden mittels der Magnetköpfe (A, B) in der Aufzeichnungsbetriebsweise, und Spurwechselzeitpunkterfassungseinrichtungen, die sequentiell mit den Pilotsignalen versorgt werden, die von den Magnetköpfen (A, B) in der Wiedergabebetriebsweise wiedergegeben werden zum Verarbeiten der Pilotsignale, die von einer Vielzahl von benachbarten aufgezeichneten Spuren wiedergegeben werden, um dadurch die Spurwechselpunkte (8b) zu erfassen.

10. Vorrichtung zum Erfassen eines Spurwechselpunktes in dem magnetischen Aufzeichnungs- und Wiedergabesystem nach Anspruch 9, worin die Pilotsignalerzeugungseinrichtungen (30, 31, 34, 35, 33) die Pilotsignale von vier verschiedenen Frequenzen $f_1$, $f_2$, $f_3$ und $f_4$ erzeugen, deren Beziehung gegeben ist durch

$$f_2 - f_1 \simeq f_4 - f_3 \simeq k \cdot f_H$$

$$f_3 - f_1 \simeq f_4 - f_2 \simeq m \cdot f_H$$

worin $k \neq m$ und $f_H$ eine horizontale Abtastfrequenz darstellt, wobei die Pilotsignale auf jeder der Aufzeichnungsspuren in einer vorherbestimmten Folge aufgezeichnet werden, während die Spurwechselzeitpunkterfassungseinrichtungen einen Frequenzumwandler (38) aufweisen zum Bewirken einer Frequenzumwandlung der Pilotsignale mit vorherbestimmten Trägersignalen ($f_1$, $f_2$, $f_3$, $f_4$), Einrichtungen (39, 40) zum Herausziehen der Komponenten jeweils $m \cdot f_H$ und $k \cdot f_H$ von den frequenzumgewandelten Signalen, Einrichtungen (41) zum Bestimmen einer Differenz zwischen den Komponenten $m \cdot f_H$ und $k \cdot f_H$ und Begrenzungseinrichtungen (42), die mit dem Ausgangssignal versorgt werden, das durch die zuletzt erwähnten Einrichtungen (41) erzeugt werden.

11. Einrichtung zum Erfassen eines Spurwechselpunktes in dem magnetischen Aufzeichnungs- und Wiedergabesystem gemäß Anspruch 9 oder 10, das weiterhin aufweist einen PLL (Phasenvergleichsschleife)-Kreis (90, 91, 92) der mit dem Ausgangssignal versorgt wird, das von den Spurwechselzeitpunkterfassungseinrichtungen abgeleitet wird, Phasenvergleichseinrichtungen (81) zum Vergleichen der Phase des Ausgangssignals des PLL-Kreises mit dem eines Steuerungssignals, das in Synchronismus mit dem Überwechseln der Magnetköpfe erzeugt wird, und Einrichtungen (88) zum Anwenden des Ausgangssignals der Phasenvergleichseinrichtungen auf einen Gangspillservokreis.

**Revendications**

1. Pour une utilisation dans un appareil d'enregistrement et de reproduction magnétique dans lequel une information est enregistrée sur une bande magnétique le long de pistes ($A_i$, $B_i$) et est reproduite au moyen d'un balayage hélicoîdal par au moins deux têtes rotatives (A, B) possédant des angles azimutaux respectifs différents l'un de l'autre, procédé de détection de positions de changement de piste (8b) représentatives du cadencement selon lequel chacune desdites têtes magnétiques (A, B) est amenée par décalage sur une piste directement adjacente ou sur une piste suivante voisine située à une distance d'une piste, dans des modes de reproduction spéciaux, incluant les phases opératoires consistant à:
   a) enregistrer un signal pilote sur chacune desdites pistes d'enregistrement ($A_i$, $B_i$) au moyen desdites têtes magnétiques (A, B), ce qui a pour effet que l'enregistrement dudit signal pilote est réalisé avec des fréquences dans des positions respectives suivant la direction longitudinale de la piste portant un enregistrement et/ou avec des phases différant périodiquement d'une piste à l'autre;
   b) reproduire ledit signal pilote à partir desdites pistes portant un enregistrement, au moyen desdites têtes magnétiques; et
   c) déterminer les positions de changement de piste (8b) au moyen du traitement des signaux pilotes lus à partir d'une pluralité de pistes voisines.

2. Procédé pour détecter la position de changement de piste dans un appareil d'enregistrement et de reproduction magnétique selon la revendication 1, selon lequel l'enregistrement dudit signal piloge sur au moins quatre pistes d'enregistrement voisines (par exemple $A_1$, $B_1$, $A_2$, $B_2$) est réalisé avec des fréquences différentes d'une piste à l'autre, dans des positions suivant la direction longitudinale de la piste d'enregistrement, qui diffèrent d'une piste à l'autre et/ou avec des phases qui diffèrent d'une piste à l'autre, ledit cylindre pilote étant périodiquement enregistré à un intervalle correspondant auxdites au moins quatre pistes d'enregistrement voisines.

3. Procédé pour détecter la position de changement de piste dans un appareil d'enregistrement et de reproduction magnétique selon la revendication 2, selon lequel ledit signal pilote comprend quatre signaux de fréquences qui diffèrent les une des autres et qui sont lus périodiquement à un intervalle correspondant aux quatre pistes d'enregistrement voisines.

4. Procédé pour détecter la position de changement de piste dans un appareil d'enregistrement et de reproduction magnétique selon la revendication 3, selon lequel lesdits quatre signaux à fréquences différentes, enregistrés périodiquement en tant que signal pilote à un intervalle correspondant aux quatres pistes d'enregistrement voisines et représentés par $f_1$, $f_2$, $f_3$, $f_4$ respectivement, sont reliés entre eux conformément à

$$f_2-f_1 \simeq f_4-f_3 \simeq k \cdot f_H$$

$$f_3-f_1 \simeq f_4-f_2 \simeq m \cdot f_H$$

où $k \neq m$ et $f_H$ représente une fréquence de balayage horizontal, et sont enregistrés selon une séquence prédéterminée, et selon lequel lesdits signaux à fréquences différentes ($f_1$, $f_2$, $f_3$, $f_4$) tels qu'ils sont lus sont soumis à une conversion de fréquence avec des signaux de porteuse prédéterminés de manière à extraire lesdites composantes $m \cdot f_H$ et $k \cdot f_H$, ces deux composantes étant soustraites l'une de l'autre de manière à obtenir ainsi la détection des positions de changement de piste.

5. Procédé de détection de la position de changement de piste dans un appareil d'enregistrement et de reproduction magnétique selon la revendication 4, lesdits signaux de fréquence ($f_1$, $f_2$, $f_3$, $f_4$) étant enregistrés selon la séquence $f_1$, $f_2$, $f_4$ et $f_3$ ou $f_1$, $f_3$, $f_4$ et $f_2$, et lesdits signaux de porteuse prédéterminés incluant des signaux possédant les mêmes fréquences que celles desdits signaux de fréquence pilotes, selon lequel le signal de fréquence $f_2$ ou $f_3$ est utilisé en tant que signal de porteuse pour les signaux de fréquence pilotes lus par la tête magnétique (A) qui a enregistré ledit signal le fréquence pilote; $f_1$ ou $f_4$, parmi lesdites deux têtes magnétiques (A, B) possédant des angles azimutaux différents, tandis que le signal de fréquence $f_1$ ou $f_4$ est utilisé en tant que signal de porteuse pour des signaux de fréquence pilotes lus par l'autre tête magnétique (B), qui a enregistré le signal de fréquence pilote $f_2$ ou $f_3$.

6. Procédé de détection de la position de changement de piste dans un appareil d'enregistrement et de reproduction magnétique selon la revendication 2, selon lequel ledit signal pilote inclut un signal à fréquence unique ($f_0$) enregistré périodiquement sur lesdites pistes d'enregistrement ($A_i$, $B_i$) à un intervalle correspondant auxdites quatre pistes d'enregistrement voisines, dans des positions d'enregistrement suivant la direction longitudinale de la piste d'enregistrement, qui diffèrent d'une piste à l'autre, et/ou avec des phases différant d'une piste à l'autre.

7. Procédé de détection de la position de changement de piste dans un appareil d'enregistrement et de reproduction magnétique selon la revendication 6, dans lequel ledit signal pilote à ladite fréquence unique ($f_0$) est enregistré de façon intermittente toutes les quatre pistes voisines, périodiquement à un intervalle de 2 H (H représentant une période horizontale), la position dans laquelle ledit signal pilote ($f_0$) est enregistré sur les deux pistes voisines desdites quatre pistes voisines, étant décalée de 1 H à partir de la position dans laquelle ledit signal pilote est enregistré sur les deux autres pistes voisines, et la phase du signal pilote enregistré sur les deux pistes d'enregistrement, qui ne sont pas voisines l'une de l'autre, est inversée périodiquement à l'intervalle de 2 H.

8. Procédé de détection de la position de changement de piste dans un appareil d'enregistrement et de reproduction magnétique selon la revendication 7, dans lequel le signal pilote lu et un signal dérivé par retardement, de 2 H, dudit signal pilote lu sont additionés l'un à l'autre ou soustraits l'un de l'autre, le signal résultant de l'addition ou de la soustraction étant échantillonné à un instant prédédeterminé, le signal échantillonné ainsi obtenu étant comparé à un signal échantillonné à partir dudit signal obtenu, avec un retard de 1 H par rapport audit échantillonnage effectué audit instant prédéterminé.

9. Pour une utilisation dans un appareil d'enregistrement et de reproduction magnétique, dans lequel une information est enregistrée sur une bande magnétique le long de pistes et est lue au moyen d'un balayage hélicoîdal effectué par au moins deux têtes rotatives possédant des angles azimutaux respectifs différant l'un de l'autre, appareil pour détecter des positions de changement de piste (8b), représentatives du cadencement avec lequel chacune desdites têtes magnétiques (A, B) saute à une piste directement adjacente ou à une piste suivante voisine située une piste plus loin, dans des modes spéciaux de lecture, incluant: des moyens de production de signaux pilotes servant à produire des signaux pilotes devant être enregistrés sur chacune desdites pistes d'enregistrement au moyen desdites têtes magnétiques (A, B) lors du fonctionnement à l'enregistrement; et des moyens de détection du cadencement des changements de piste, alimenté de façon séquentielle par lesdits signaux pilotes reproduits par lesdites têtes magnétiques (A, B) lors du fonctionnement à la lecture pour le traitement desdits signaux pilotes reproduits à partir d'une pluralité de pistes voisines portant des enregistrements, de manière à détecter ainsi lesdites positions de changement de piste (8b).

10. Appareil our détecter une position de changement de piste dans le système d'enregistrement et de reproduction magnétique selon la revendication 9, dans lequel lesdits moyens (30, 31, 34, 35, 33) de production desdits signaux pilotes produisent lesdits signaux pilotes possédant quatre fréquences différentes $f_1$, $f_2$, $f_3$, $f_4$, dont les relations sont fournies par

$$f_2 - f_1 \simeq f_4 - f_3 \simeq k \cdot f_H$$

$$f_3 - f_1 \simeq f_4 - f_2 \simeq m \cdot f_H$$

où $k \neq m$ et $f_H$ représente une fréquence de balayage horizontal, lesdits signaux pilotes étant enregistrés dans chacune desdites pistes d'enregistrement selon une séquence prédéterminée, tandis que lesdits moyens de détection du cadencement des changements de piste incluent un convertisseur de fréquence (38) servant à réaliser une conversion de fréquence desdits signaux pilotes avec des signaux de porteuse prédéterminés ($f_1$, $f_2$, $f_3$, $f_4$), des moyens (39, 40) pour extraire les composants $m \cdot f_H$ et $k \cdot f_H$ respectivement à partir des signaux convertis du point de vue de la fréquence, des moyens (41) pour déterminer une différence entre lesdites composantes $m \cdot f_H$ et $k \cdot f_H$, et des moyens limiteurs (42) alimentés par les signaux de sortie produits par les moyens (41) mentionnés en dernier.

11. Appareil our détecter la position de changement de piste dans un appareil d'enregistrement et de reproduction magnétique selon la revendication 9 ou 10, incluant en outre un circuit PLL (boucle à verrouillage de phase) (90, 91, 92) alimenté par le signal de sortie tiré desdits moyens de détection du cadencement des changements de piste, des moyens de comparaison de phase (80) servant à comparer la phase du signal de sortie délivré par le circuit PLL à celle d'un signal de commande produit de façon synchrone avec la commutation desdites têtes magnétiques, et des moyens (88) servant à appliquer le signal de sortie desdits moyens de comparaison de phase à un circuit de servo-commande du cabestan.

**0 081 232**

## FIG. IA

DIRECTION OF TAPE TRANSPORTING

DIRECTION OF HEADS SCANNING

HEAD B

HEAD A

$A_1$

$\alpha_H$

$B_1$  $A_2$  $B_2$  $A_3$  $B_3$  $A_4$  $B_4$  $A_5$  $B_5$

## FIG. IB

DIRECTION OF TAPE TRANSPORTING

DIRECTION OF HEADS SCANNING

HEAD A

HEAD B

$A_1$

$\alpha_H$

$B_1$  $A_2$  $B_2$  $A_3$  $B_3$  $A_4$  $B_4$  $A_5$  $B_5$

1

# FIG. 2

2a —

| A₁ | A₂ | A₃ | B₄ | B₅ | B₆ | A₇ | A₈ |

2b —

A₃ ...... B₂ A₃

I FIELD
(HEAD A)

I FIELD
(HEAD B)

# FIG. 4

27 —o → | I ST MIXER | 30 → | 2 ND MIXER | 31 → | ⊠ | 32 → 33

28 —o →

34

| f₁ |
| f₂ |
| f₃ |
| f₄ |

SELECTING CKT   35

29 —o

# FIG.3
# PRIOR ART

## FIG. 5

DIRECTION OF TAPE TRANSPORTING

$f_1$ $f_2$ $f_4$ $f_3$ $f_1$ $f_2$ $f_4$ $f_3$ $f_1$ $f_2$

DIRECTION OF HEADS SCANNING

HEAD A

HEAD B

$A_1$ $B_1$ $A_2$ $B_2$ $A_3$ $B_3$ $A_4$ $B_4$ $A_5$ $B_5$

## FIG. 6

36

37

34

$f_1$ $f_2$ $f_3$ $f_4$

SELECTING CKT — 44

CONVERTER 38

1 ST TANK CKT 39

2 ND TANK CKT 40

41 +/−

LIMITER 42

43

4

# FIG.7

# FIG.8

DIRECTION OF TAPE TRANSPORTING

DIRECTION OF HEADS SCANNING

HEAD A
HEAD B

## FIG.9

## FIG.10

# FIG. 11

# FIG. 12

PILOT SIGNAL $f_0$

DIRECTION OF HEADS SCANNING

$A_1$    $B_1$    $A_2$    $B_2$    $A_3$    $B_3$

7

# FIG. 13

45 o— [GATE CKT] 48 —— 49 [P₁] [P₂] [P₃] — 51 ⊕ — 52 ▷ — 53 — [LIMITER] 54 — [F·F] 55 —o 56

46 o— [GENERATING CKT] 50

47 o—

# FIG. 14

$P_1 - P_2 + P_3$

14b

14a

I TRACK PITCH

# FIG.15

PILOT SIGNAL fo

DIRECTION OF HEADS SCANNING

A₁  B₁  A₂  B₂  A₃  B₃

FIG. 16

## FIG. 17

## FIG. 18

## FIG. 19